**Europäisches Patentamt**

**European Patent Office**

**Office européen des brevets**

(19)

(11) Veröffentlichungsnummer: **0 014 439**
A2

(12) **EUROPÄISCHE PATENTANMELDUNG**

(21) Anmeldenummer: **80100488.8**

(22) Anmeldetag: **31.01.80**

(51) Int. Cl.³: **C 11 B 7/00**
C 07 C 29/78, C 07 C 67/52
C 11 C 1/00

(30) Priorität: **05.02.79 DE 2904195**

(43) Veröffentlichungstag der Anmeldung:
**20.08.80 Patentblatt 80/17**

(84) Benannte Vertragsstaaten:
**BE CH DE FR GB IT NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Kroll, Benno**
**Benninghäuserstrasse 16**
**D-4000 Düsseldorf(DE)**

(72) Erfinder: **Barnstorf, Joachim, Dr.**
**Einsteinstrasse 15**
**D-4000 Düsseldorf(DE)**

(54) **Verfahren zur Trennung von Fettstoffgemischen in Bestandteile verschiedener Schmelzpunkte.**

(57) Verbesserung des in DE-PS 23 17 563 beanspruchten Umnetzverfahrens zur Auftrennung von Fettgemischen in Komponenten unterschiedlicher Schmelzpunkte.

Das Trennverfahren wird in zwei hintereinander geschalteten Trennstufen durchgeführt, wobei die in der letzten Trennstufe erhaltene wäßrige Dispersion der höher schmelzenden Fettstoffanteile in die Vakuumverdampfungsstufe der aufgeschmolzenen Fettstoffgemische zurückgeführt wird und dort mit dem wärmeren, noch nicht auf die gewünschte Trenntemperatur abgekühlten Ausgangsmaterial vereinigt wird.

Der Vakuumverdampfung in der ersten Trennstufe kann eine Kühlvorrichtung, insbesondere eine Kühlstufe mit Kratzkühlern vorgeschaltet sein, in der 10 - 40 % der insgesamt auszukristallisierenden höherschmelzenden Fettstoffanteile vorkristallisiert werden.

EP 0 014 439 A2

Croydon Printing Company Ltd

Düsseldorf, den    25. 1. 1980        HENKEL KGaA
Henkelstraße 67                       ZR-FE/Patente

                                      Dr. Bz/Et


P a t e n t a n m e l d u n g

D 5628

Verfahren zur Trennung von Fettstoffgemischen in Bestandteile verschiedener Schmelzpunkte

_____


Aus DE-PS 23 17 563 ist ein Verfahren zum

Trennen von Fettstoffgemischen in Bestandteile verschiedener Schmelzpunkte nach dem Umnetzverfahren durch
(a) partielles oder vollständiges Aufschmelzen des Fettstoffgemisches, (b) Abkühlen bis zur Kristallisation der
höherschmelzenden Fettstoffanteile, wobei der zur Abkühlung und Kristallisation dieser Anteile erforderliche
Wärmeentzug durch Vakuumverdampfung einer mit dem Fettstoffgemisch in unmittelbarem Kontakt stehenden wäßrigen
Phase erzielt wird, (c) Herstellen einer Dispersion von
einander getrennter flüssiger und fester Fettstoffpartikeln, (d) Trennen dieser Dispersion mittels Zentrifugen in eine ölige, die niedriger schmelzenden Fettstoffanteile enthaltende Phase und eine wäßrige, die auskristallisierten Fettstoffanteile in dispergierter Form

/2

enthaltende Phase und (e) Abtrennen der höher schmelzenden Fettstoffanteile aus der wäßrigen Phase durch Filtration oder durch Aufschmelzen und anschließendes Abzentrifugieren oder Absitzenlassen, bekannt, das gekennzeichnet
ist durch folgende Maßnahmen:

Zusatz einer wäßrigen nicht grenzflächenaktiven Elektrolytlösung zum geschmolzenen Fettstoffgemisch und Verdampfen
eines Teils des Wassers der Elektrolytlösung unter Anwendung von Vakuum bei gleichzeitigem intensivem Durchmischen
bis zur teilweisen oder vollständigen Kristallisation des
höher schmelzenden Anteils im Verfahrenschritt (b), und
Zufügen von Netzmittellösung unter Dispergieren der
flüssigen und festen Fettstoffe, vorzugsweise unter weiterer Aufrechterhaltung des Vakuums und Fortsetzung der
Wasserverdampfung bis zum Erreichen der Trenntemperatur
im Verfahrensschritt (c).

Das bekannte Verfahren kann in mehreren Trennstufen durchgeführt werden, indem man die im Verfahrensschritt (d) anfallende ölige, die niedriger schmelzenden
Fettstoffanteile enthaltende Phase nochmals einem gleichartigen Trennverfahren auf einem niedrigeren Temperaturniveau unterwirft. Bei Bedarf können weitere Trennstufen
angeschlossen werden. Die jeweils im Verfahrensschritt
(d) neben der öligen Phase anfallende wäßrige Dispersion
der auskristallisierten, höher schmelzenden Fettstoffanteile wird gemäß Verfahrensschritt (e) für sich weiter
aufgearbeitet.

Bei der mehrstufigen Verfahrensweise wird die endgültige
Trenntemperatur erst in der letzten Trennstufe erreicht.
Durch die hieraus resultierende stufenweise Auskristallisation und Abtrennung des höher schmelzenden Fettstoffanteils kann insbesondere eine reinere Ölphase mit niedrigem Schmelzpunkt erhalten werden.

Das bekannte Verfahren weist jedoch noch gewisse
Mängel auf, insbesondere, wenn weniger kristallisationsfreudige Fettstoffe getrennt werden sollen. Es kann dann
zu verzögerter Kristallbildung in der Vakuum-Verdampfungsstufe kommen, was zu verringerten Durchsätzen
bzw. zu schlechterer Qualität der Endprodukte führt.
Diese verzögerte Kristallbildung ist der Grund, warum
das Verfahren des Hauptpatentes in vielen Fällen in der
Praxis nicht oder nicht mit ausreichendem Erfolg durchgeführt werden kann.

Ein weiterer Nachteil dieses Verfahrens ist darin zu
sehen, daß die bei mehrstufiger Verfahrensdurchführung
im jeweiligen Verfahrensschritt (e) anfallenden wäßrigen
Dispersionen der auskristallisierten höher schmelzenden
Fettstoffanteile für sich aufgearbeitet werden müssen,
was getrennte Apparaturen und Verfahrensschritte, insbesondere einen erhöhten Energieaufwand für das Aufschmelzen der in der Dispersion vorliegenden festen Fettstoffe
erfordert. Eine gemeinsame Verarbeitung der anfallenden
Dispersionen ist im allgemeinen wegen der unterschiedlichen Qualität der anfallenden höher schmelzenden
Fettstofffraktionen nicht möglich.

Gegenstand der Erfindung ist eine Verbesserung des bekannten Verfahrens hinsichtlich des Verfahrensablaufs und der Qualität der erhaltenen Produkte,
dadurch gekennzeichnet, daß man das Trennverfahren in
mehreren hintereinander geschalteten Trennstufen durchführt, wobei die im Verfahrensschritt (d) einer nachgeschalteten Trennstufe anfallende wäßrige Dispersion
der höher schmelzenden Fettstoffanteile in die Vakuum-
Verdampfungsstufe (b) einer vorgeschalteten Trennstufe

0014439

zurückgeführt und dort mit dem wärmeren, noch nicht auf
die gewünschte Trenntemperatur dieser Stufe abgekühlten
Ausgangsgemisch vereinigt wird. Die rückgeführte
Dispersion dient unmittelbar zur Kühlung und Dispergierung der eingesetzten Fettstoffmischung.

Auf diese Weise gelingt es, den Durchsatz vorhandener
Anlagen zu erhöhen und zusätzliche kostspielige oder
umständliche Maßnahmen zur Verbesserung der Kristallisationsneigung der zu trennenden Fettstoffgemische,
z.B. die Entfernung von Verunreinigungen, oder besondere
apparative und verfahrenstechnische Maßnahmen zur Aufarbeitung der die höherschmelzenden Anteile enthaltenden
wäßrigen Dispersionen, zu vermeiden.

Das Verfahren der Erfindung wird demgemäß in folgender
Weise durchgeführt:

I. Trennstufe:

a) partielles oder vollständiges Aufschmelzen des
Fettstoffgemisches

b) Zusatz von wäßriger, auskristallisierte Feststoffanteile in dispergierter Form sowie Netzmittel und
Elektrolyt enthaltender Phase aus Verfahrensschritt
(d) der II. Trennstufe zum geschmolzenen Fettstoffgemisch und Verdampfen eines Teils des Wassers unter
Anwendung von Vakuum bei gleichzeitigem intensivem
Durchmischen bis zur teilweisen oder vollständigen
Kristallisation des höher schmelzenden Anteils

c) Weiteres Zufügen von Netzmittel und Elektrolyt enthaltender wässriger Lösung ( Altverdünnung) aus
Verfahrensschritt (e) der I. Trennstufe, gegebenenfalls unter Zusatz von frischem Netzmittel, Elektrolyt und Wasser, unter Dispergierung der flüssigen und festen Fettstoffe, vorzugsweise unter weiterer Aufrechterhaltung des Vakuums und Fortsetzung der Wasserverdampfung bis zum Erreichen der Trenntemperatur

d) Trennen der Dispersion mittels Zentrifugen in eine ölige, die niedriger schmelzenden Fettstoffanteile enthaltende Phase und eine wäßrige, die auskristallisierten Fettstoffanteile in dispergierter Form enthaltende Phase

e) Abtrennen der höher schmelzenden Fettstoffanteile aus der wäßrigen Phase (Altverdünnung) durch Filtration oder durch Aufschmelzen und anschließendes Abzentrifugieren oder Absitzenlassen.

II. Trennstufe:

Die im Verfahrensschritt (d) angefallene ölige, die niedriger schmelzenden Fettstoffanteile enthaltende Phase wird einem nochmaligem, im wesentlichen gleichartigen Trennverfahren auf einem niedrigeren Temperaturniveau bis einschließlich Verfahrensschritt (d) unterworfen. Der Kristallisations- und Dispergiervorgang (Verfahrensschritte (b) und (c)) erfolgt mit Hilfe von Altverdünnung aus Verfahrensschritt (e) der I. Trennstufe, gegebenenfalls unter Zusatz von frischem Netzmittel, Elektrolyt und Wasser.

Die im Verfahrensschritt (d) anfallende wäßrige, die auskristallisierten Fettstoffanteile in dispergierter Form enthaltende Phase wird jedoch nicht gemäß Verfahrensschritt (e) weiter verarbeitet, sondern in den Verfahrensschritt (b) der I. Trennstufe zurückgeführt.

/6

Das Temperaturniveau der II. Trennstufe kann bereits der vorgesehenen Trenntemperatur entsprechen oder aber auch darüber liegen, wobei dann die endgültige Trenntemperatur erst nach weiteren, im wesentlichen gleichartigen Trennstufen erreicht wird. In diesem Falle wird die im jeweiligen Verfahrensschritt (d) erhaltene Fettstoffsuspension wie beschrieben in den Verfahrensschritt (b) der jeweils vorhergehenden Trennstufe zurückgeführt.

Das Verfahren der Erfindung kann diskontinuierlich oder vorzugsweise kontinuierlich durchgeführt werden. Bezüglich der weiteren Einzelheiten des Trennverfahrens sowie der verwendeten Netzmittel, Elektrolyte usw. gelten die Angaben des Patentes DE-PS 23 17 536. Insbesondere wird die im Verfahrensschritt (e) der I.Trennstufe anfallende Netzmittellösung als sogenannte Altverdünnung in den Trenngang zurückgeführt. Allerdings ist es notwendig, einen Teil dieser Lösung aus dem Kreislauf fortlaufend zu entfernen, um die Ansammlung von schleimigen Verunreinigungen aus den eingesetzten Fettstoffen, die die Kristallisation wie auch die Qualität des höher schmelzenden Fettstoffanteils beeinträchtigen können, zu vermeiden. Der dabei auftretende Netzmittel- und Elektrolytverlust muß durch Zusatz an frischem Netzmittel und Elektrolyt ausgeglichen werden. Als Netzmittel dient vorzugsweise Na-Dodecylsulfat, als Elektrolyt Magnesiumsulfat. Das Verfahren muß weiterhin so gesteuert werden, daß die bei der Verdampfungskühlung bzw. durch den Abzug von Netzmittellösung auftretenden Wasserverluste durch die zugeführte Elektrolytlösung bzw. frische Netzmittellösung ausgeglichen werden.

/7

Das Verfahren eignet sich zur Trennung der verschiedenartigsten Fettstoffgemische, insbesondere lassen sich
Gemische aus Fettsäuren, Fettsäureestern oder Fettalkoholen trennen, wenn die Schmelzpunkte der zu trennenden
Komponenten hinreichend weit auseinanderliegen.

Von besonderer technischer Bedeutung ist die Trennung
von Fettsäuregemischen in Olein und Stearin bzw. von
Fettalkoholgemischen in Oleylalkohol und Stearylalkohol. Entsprechend lassen sich bei Raumtemperatur
feste Gemische von Fettsäuretriglyceriden in tiefer und
höher schmelzende Fraktionen trennen. Derartige Fettsäuretriglyceridfraktionen werden zur Herstellung von
Speisefetten verwandt. Es ist nicht notwendig, daß die
eine der zu trennenden Komponenten bei Zimmertemperatur
als flüssiges Öl vorliegt. Das Verfahren kann mit Erfolg
auch angewendet werden, wenn beide Anteile fest sind und
sich lediglich im Schmelzpunkt genügend unterscheiden.

Das beschriebene Verfahren kann weiterhin in der Weise
abgewandelt werden, daß man der Vakuum-Verdampfungsstufe (b) der I. Trennstufe eine konventionelle, indirekt
wirkende Kühlvorrichtung, insbesondere eine Kühlstufe
mit Kratzkühlern, vorschaltet. Hierdurch wird eine
weitere Verfahrensverbesserung, insbesondere hinsichtlich
des Durchsatzes vorhandener Anlagen, erzielt, weil man
nun mit einem bereits teilweise kristallisierten Ausgangs-Fettstoffgemisch in die Vakuum-Verdampfungsstufe
(b) der I. Trennstufe hineingeht. Zweckmäßigerweise
beträgt der Anteil der in den Kratzkühlern vorkristallisierten höherschmelzenden Fettstoffanteile 10 - 40 %
der insgesamt auszukristallisierenden höherschmelzenden
Anteile.

/8

Die besonderen Vorteile des erfindungsgemäßen Verfahrens bestehen darin, daß die rückgeführte wäßrige Dispersion der höherschmelzenden Fettstoffanteile die Kristallisationsneigung des eingesetzten Fettstoffgemisches deutlich verbessert, was sich in einer erheblichen Beschleunigung des Trennverfahrens bzw. entsprechender Erhöhung des Durchsatzes vorhandener Anlagen und einem besseren Trenneffekt pro Trennstufe zeigt. Hinzu kommt als wesentlicher energetischer Vorteil, daß die kalten wäßrigen Suspensionen der höherschmelzenden Fettstoffanteile aus den nachgeschalteten Trennstufen unmittelbar zur Kühlung der jeweils vorgeschalteten Stufe verwendet werden. Die separate Aufarbeitung dieser Dispersion durch Aufschmelzen der Fettstoffpartikeln und Abscheiden würde neben den apparativen Aufwendungen einen erheblichen Energiebetrag erfordern.

Die Rückführung von wäßriger Dispersion höher schmelzender Fettstoffanteile aus einer nachgeschalteten Trennstufe in eine vorhergehende Trennstufe in einem mehrstufigen Trennverfahren ist bereits Gegenstand der DE-OS 21 00 022. Dort wird jedoch die Kühlung der eingesetzten Fettstoffgemische ausschließlich mit Kratzkühlern vorgenommen, und die rückgeführte Dispersion dient nur zur Dispergierung des teilweise kristallisierte: Fettstoffgemisches bei gleichzeitiger Abkühlung auf die Trenntemperatur. Eine Verbesserung der Kristallisationsneigung von Fettstoffgemischen bei der Vakuum-Verdampfungskühlung konnte hieraus nicht abgeleitet werden.

## Beispiele

Es wurde entsprechend Beispiel 1 des Patentes DE-PS 23 17 563, jedoch in einer zweistufigen Trennanlage gearbeitet. In den Vakuumverdampfungskristallisator der I. Trennstufe wurde rohe Talg-Spaltfettsäure von $46^o$ C (J. Z. 58, Trübungspunkt $39^o$ C) eingesetzt. Diese Talgfettsäure wurde unter intensivem Rühren mit der Gesamtmenge der in der II. Trennstufe anfallenden Stearinsuspension von $26^o$ C vermischt. Es stellte sich eine Mischtemperatur von $36^o$ C ein, wodurch die Kristallisation der höher schmelzenden Anteile der Talgfettsäure (Stearinsäure) eingeleitet wurde. Die weitere Abkühlung bis auf $2o^o$ C erfolgte durch Evakuieren des Kristallisationsbehälters mit Hilfe einer Dampfstrahlanlage.

Durch Zugabe der Altverdünnung aus dem Verfahrensschritt (e) der I. Trennstufe mit einem Gehalt von o,2 Gew.-% Dodecylsulfat als Netzmittel, sowie gegebenenfalls weiterer Mengen an Netzmittel, Elektrolyt und Wasser zum Ausgleich von Verlusten, insbesondere durch Ausschleusen eines Teils der Altverdünnung, wurde eine trennfähige Dispersion erhalten, die in einer Vollmantelzentrifuge getrennt wurde. Die dabei anfallende Stearinsuspension wurde auf $9o - 95^o$ C erhitzt und in einem Abscheider das Stearin von der Altverdünnung getrennt. Die Altverdünnung wird - wie beschrieben - nach Ausschleusen eines Anteils von etwa 2o % wieder in den Kreislauf zurückgeführt.

Die in der I. Trennstufe anfallende Ölphase (im wesentlichen Ölsäure J.Z. 82,6, Trübungspunkt $21^o$ C) wurde in einer II. Trennstufe einem weiteren Trenngang unterworfen, wobei als Netzmittellösung ebenfalls Altverdünnung der I. Trennstufe verwendet wurde. Die Abkühlung auf 3 - 5° C erfolgte hier ebenfalls durch Vakuumverdampfung. Nach Herstellung der Dispersion erfolgte die
Trennung in Stearinsuspension und Ölphase wie in der
I. Trennstufe. Es wird ein Olein mit einer JZ von 86 -
93 und einem Trübungspunkt von 1 - 5° C erhalten. Die
Netzmittel und Elektrolyte enthaltende Stearinsuspension
wird nach Erwärmung auf 26° C in den Vakuumverdampfungs-
Kristallisator der I. Trennstufe zurückgeführt.

Zur Erhöhung des Durchsatzes der Anlage ist es zweckmäßig, einen Kratzkühler vorzuschalten. Die geschmolzene
Fettsäure tritt in den Kratzkühler mit einer Temperatur
von 46° C ein. Nach Abkühlen auf 30° C und teilweiser
Auskristallisation des höher schmelzenden Anteils wird
das Fettsäuregemisch in den Vakuumverdampfungs-Kristallisator eingespeist und wie angegeben weiter behandelt.

0014439
HENKEL KGaA
ZR-FE/Patente

Verfahren zur Trennung von Fettstoffgemischen in Bestandteile verschiedener Schmelzpunkte

Patentansprüche

1. Verfahren zum Trennen von Fettstoffgemischen in Bestandteile verschiedener Schmelzpunkte nach dem Umnetzverfahren durch (a) partielles oder vollständiges
Aufschmelzen des Fettstoffgemisches, (b) Abkühlen bis
zur Kristallisation der höherschmelzenden Fettstoffanteile, wobei der zur Abkühlung und Kristallisation
dieser Anteile erforderliche Wärmeentzug durch Vakuumverdampfung einer mit dem Fettstoffgemisch in unmittelbarem Kontakt stehenden wäßrigen Phase erzielt wird,
(c) Herstellen einer Dispersion von einander getrennter
flüssiger und fester Fettstoffpartikeln, (d) Trennen
dieser Dispersion mittels Zentrifugen in eine ölige,
die niedriger schmelzenden Fettstoffanteile enthaltende Phase und eine wäßrige, die auskristallisierten Fettstoffanteile in dispergierter Form enthaltende Phase und (e) Abtrennen der höher schmelzenden Fettstoffanteile aus der wäßrigen Phase durch
Filtration oder durch Aufschmelzen und anschließendes Abzentrifugieren oder Absitzenlassen gemäß Patent DE-PS 23 17 563, dadurch gekennzeichnet, daß man das Trennverfahren in mehreren hintereinandergeschalteten
Trennstufen durchführt, wobei die im Verfahrensschritt
(d) einer nachgeschalteten Trennstufe anfallende
wäßrige Dispersion der höher schmelzenden Fettstoffanteile in die Vakuum-Verdampfungsstufe (b) einer vorgeschalteten Trennstufe zurückgeführt und dort mit dem
wärmeren, noch nicht auf die gewünschte Trenntemperatur dieser Stufe abgekühlten Ausgangsgemisch vereinigt wird.

2. Verfahren nach Anspruch 1, dadurch gekennzeichnet, daß die Trennung in zwei hintereinandergeschalteten Trennstufen durchgeführt wird.

3. Verfahren nach Anspruch 1 oder 2 zum Trennen von Gemischen von Fettsäuren, Fettalkoholen oder Fettsäureglyceriden.

4. Verfahren nach Anspruch 1 - 3, dadurch gekennzeichnet, daß man der Vakuum-Verdampfungsstufe (b) der I. Trennstufe eine Kühlstufe mit Kratzkühlern vorschaltet, in der 10 - 40 % der insgesamt auszukristallisierenden höherschmelzenden Fettstoffanteile zur Kristallisation gebracht werden.